# EUROPEAN PATENT SPECIFICATION

(11) **EP 3 612 863 B1**
(45) Date of publication and mention of the grant of the patent: **30.12.2020**
(21) Application number: 18716631.9
(22) Date of filing: 16.04.2018
(51) Int. Cl.: G01V 1/28

(54) **POST-STACK KIRCHHOFF DEPTH DE-MIGRATION METHOD FOR TILTED TRANSVERSE ISOTROPIC (TTI) AND HETEROGENEOUS MEDIA BASED ON RAY TRACING ON MIGRATED DATA**
POSTSTACK-KIRCHHOFF-TIEFENDEMIGRATIONSVERFAHREN FÜR GENEIGTE, TRANSVERSALISOTROPE UND HETEROGENE MEDIEN BASIEREND AUF STRAHLVERFOLGUNG AUF MIGRIERTEN DATEN
PROCÉDÉ DE DÉMIGRATION POST-CUMUL DE PROFONDEUR DE KIRCHHOFF POUR UN MILIEU ISOTROPE TRANSVERSAL (TTI) ET HÉTÉROGÈNE INCLINÉ BASÉ SUR UN TRAÇAGE DE RAYON SUR DES DONNÉES TRANSFÉRÉES

(30) Priority: 21.04.2017 EP 17382212
(43) Date of publication of application: 26.02.2020
(73) Proprietor: Repsol Exploración, S.A., 28045 Madrid (ES)
(72) Inventor: JIAO, Junru, The Woodlands, Texas 77381 (US)
(74) Representative: ABG Intellectual Property Law, S.L.
(86) International application number: PCT/EP2018/059641
(87) International publication number: WO 2018/192867

(56) References cited:
- US-A1- 2002 116 160
- US-A1- 2006 133 208
- JUNRU JIAO ET AL: "A de-migration workflow to fast validate models", SEG TECHNICAL PROGRAM EXPANDED ABSTRACTS 2013, 19 August 2013 (2013-08-19), pages 4837-4841, XP055416894, DOI: 10.1190/segam2013-0363.1

## Description

### FIELD OF THE INVENTION

The present invention is related to a specific de-migration method based on ray tracing algorithms characterized in that the interpolation procedure involved in the computation of the travel time required by the de-migration is being modified. The interpolation according to the invention obtains an accurate travel time for those rays departing from sources being interpolated.

### PRIOR ART

Seismic exploration has been used to image subsurface geological structures by oil industry. In an experiment of seismic exploration, a source at the surface emits wavefields and then wavefields propagate downward into subsurface. The down-going wavefields are reflected /diffracted by the interfaces of the structures and then propagate upward to the surface where groups of sensors are planted with the certain limited distances from the source to acquire the reflected wavefields.

The acquired wavefields from a single source are called a common shot recorder (gather) or referred as raw field seismic data. To explore a larger area, thousands of experiments are required to exercise in the designed layout.

The acquired wavefields from an individual experiment are migrated to image the subsurface structures adjacent to the source according to the wave propagation theory with assuming the velocity model of subsurface.

To image the area, migration is performed on all experiments and results from all migrations are stacked together respective to the source locations. This process is referred as pre-stack migration.

The pre-stack migration can be performed in either time or depth domain algorithms. In the time domain, the migrated results are expressed in the product of vertical propagating velocity of seismic wave and the vertical depth propagated, which is referred as pre-stack time migration.

In the depth domain, the migrated results are expressed in the vertical depth propagated, which is referred as pre-stack depth migration.

Pre-stack time migration only can image simple structures correctly while pre-stack depth migration can image complicated structures with high fidelity. However, pre-stack time migration requires much less computational cost than pre-stack depth migration.

In a special case if the sensors are only placed in the same location as source's location, the acquired field seismic wavefields are referred as zero offset seismic data. All zero offset seismic data from different experiments are migrated simultaneously to image the structures. This process is called as post-stack migration.

As similar to the pre-stack migration, post-stack migration also can be categorized as post-stack time migration and post-stack depth migration.

However, in most cases, zero offset seismic data are derived by processing normally acquired seismic data using geophysical algorithms instead of directly acquiring in the field un-efficiently. The computational cost for post-stack migration is much less than pre-stack migration.

De-migration (Bleistein, et.al. 2001) is a reverse process of migration to derive raw seismic data comparable to common shot gathers (pre-stack de-migration) or zero offset seismic data (post-stack de-migration) acquired in the field. Similar to migration, de-migration can also be implemented in both time and depth domains. De-migration requires image from the migration and the velocity model used in the migration.

Prestack 3D Kirchhoff migration has been widely used in seismic exploration to image subsurface structures and to generate synthetic seismogram (forward modeling) from geological models and wavelets for more than 20 years. Bleistein, et.al. (2001) described the mathematical principles and algorithms for the migration and forward modeling. De-migration also can generate seismogram from migrated seismic data instead of from geological models and wavelets.

A major difference in migration algorithms arises from the way the velocity field is utilized. In the early 1970's when migration algorithms were being developed the computer power was so limited that several approximations were proposed in order to get computer programs to run in a reasonable time.

These assumptions led to time migration for collapsing diffractions and moving dipping events toward the true position but leaving the migrated image with a time axis which must be depth converted at a later stage.

Time migration assumes that the diffraction shape is hyperbolic and ignores ray bending at velocity boundaries.

Depth migration assumes that the arbitrary velocity structure of the earth is known and computes the correct diffraction shape for the velocity model. The data are then migrated according to the diffraction shape and the output is defined with a depth axis. Results may be stretched back to time to enable comparison with time migrations.

If the velocity model for the depth migration is incorrect then the migration will be incorrect and the error may be difficult to detect if the migration is performed post-stack. Pre-stack depth migration will provide an error estimate of the migrated result.

Depth migration typically takes ten times longer to run than time migration and is very sensitive to velocity errors, typically required to be within 1%, and may require many iterations which further increases run time.

Post-stack time migration is often performed for reasons of economy but pre-stack depth migration is almost always required since it is almost impossible to define an accurate velocity model using purely post-stack processing. That is, time migration proceeds in advance of depth migration as the sensitivity of depth migration to the velocity model can easily lead to very poor and misleading results.

Then early application of de-migration is to apply post-stack Kirchhoff de-migration in the time domain (Lee, et.al. 2004). As it has been previously indicated, the pre-stack Kirchhoff time migration is first applied on common shot data and then the migrated data are stacked. Next step is to perform post-stack time de-migration on the stacked migration data. Following the de-migration, post-stack Kirchhoff depth migration is carried out on the de-migration result. The final product from this workflow is the depth migration of seismic data.

This workflow has been applied on field data examples. Comparing with directly application of pre-stack depth migration, this workflow reduces computational cost significantly. However, since pre-stack time migration could not image complicated structure correctly, the above workflow could not image complicated structure with high fidelity.

Since pre-stack Kirchhoff depth migration/de-migration requires massive computational capacity, researchers have developed methods to sparse seismic data or image before migration/de-migration which leads to reduce the size of input data and therefore computational cost.

In 2007, Herve Chauris and Truong Nguyen (Chauris, H. and Nguyen, T. 2007) showed the de-migration algorithm in the curvelet and depth domain. They first decomposed image into curvelets in the depth domain. Then they performed de-migrtation on each individual curvelet. Summation over all curvelts generated the final de-migration. This method can image complicated structures and reduce the computational cost while the fidelity of de-migration depends on the how the image is decomposed and sparse.

The more sparser requires the less computation which leads to low fidelity.

In 2013, Jiao, et.al, in the article "A de-migration workflow to fast validate models", SEG Houston 2013 Annual Meeting, introduced anisotropic 3D Kirchhoff depth de-migration and established the workflow to use de-migration for fast models validation.

The present invention is a post-stack Kirchhoff depth de-migration method comprising a coarsening process for reducing the computational cost by using a limited set of sources, the surface sources according to a coarse grid, and a specific interpolation method for the computation of the travel time when solving the Kirchhoff equation.

According to the prior art, the travel time between a surface source and a subsurface point is being interpolated by weighted averaging the computed travel time between the subsurface point and a set of sources of the coarse grid of sources surrounding the surface source. This conventional algorithm is very efficient while it results in errors in travel time, especially for shallow parts even in constant velocity, resulting in distorted seismograms from de-migration.

The present invention provides a modified interpolation method that is as efficient as the conventional algorithm that improves the accuracy of interpolation reducing or even avoiding distortion of seismograms obtained from de-migration.

### DESCRIPTION OF THE INVENTION

The present invention is a computer implemented method, in particular a post-stack Kirchhoff depth de-migration method for tilted transverse isotropic (TTI) and heterogeneous media based on ray tracing on migrated data, according to claim 1. The method may be applied to 2D and also to 3D domains. The de-migrated result is a zero-offset seism data in the time domain.

The method is derived from a general pre-stack Kirchhoff de-migration formula that may be expressed as: $U \left(\overline{x}, ω\right) ∼ {\int }_{Ω} {iωe}^{iω \left({τ}_{s}+{τ}_{r}\right)} {A}_{s} {A}_{r} \left|Δ\left({τ}_{s}+{τ}_{r}\right)\right| I \left(\overline{x}, z\right) d Ω$ wherein the "∼" symbol denotes "being proportional to", *U*(*x̅,ω*) is the perturbation of the acoustic wave, *i* is the imaginary unit, *ω* is the frequency, *e* is the base of natural logarithms; and *I*(*x̅,z*) is the subsurface imaging in the depth domain obtained by depth migration.

Ω denotes the domain where the imaging is being defined. The domain may be a 3D domain or a 2D domain. *x̅* denotes the surface coordinates, (*x*) for a 2D domain or (*x,y*) for a 3D domain, being additionally *z* the vertical or depth coordinate. According to this notation the coordinates of certain point of the image in the Ω domain is expressed as *I*(*x̅,z*), that is interpreded as *I*(*x,z*) in a 2D domain or *I*(*x,y,z*) in a 3D domain.

*τₛ*,*τᵣ* are travel-time from the imaging point, a subsurface imaging point, to a source and a receiver respectively.

*Aₛ*,*Aᵣ* are the amplitudes of the Green's function from the source and receiver to the imaging point respectively. The expression *AₛAᵣ*|Δ(*τₛ* + *τᵣ*)| will be denoted as the amplitude term *w*(*s*,*r*).

For post-stack time de-migration in constant velocity, the amplitude term can be reduced to: $w \left(s, r\right) = \frac{8 {V}_{0} {cos}^{2} \left(θ\right)}{{V}_{rms}^{4} {T}^{2}}$ being $cos \left(θ\right) = \sqrt{1 - {\left(\frac{\partial T}{\partial ρ}\right)}^{2}}$ where *V*₀ and *Vᵣₘₛ* are RMS velocities in surface and image points respectively, *T* is two-way travel time and *ρ* is the surface distance form source to the surface vertical projection of subsurface image point. *θ* is the dip angle.

For post-stack de-migration in depth domain the weighting function can be determined as: $w \left(s, r\right) = \frac{8 {V}_{a 0} {cos}^{2} \left(θ\right)}{{V}_{avg}^{4} {R}^{2}}$ being $cos \left(θ\right) = \sqrt{1 - {\left(\frac{\partial T}{\partial ρ}\right)}^{2}}$ and $R = \sqrt{{z}^{2} + {ρ}^{2}}$ where *V*_{*a*0} and *V_{avg}* are average velocities in surface and image points respectively, *z* is depth, *T* is two-way travel time and *ρ* is the surface distance form source to the surface vertical projection of subsurface image point.

The method comprises the following steps:
- *providing a seismic image of subsurface points in a depth domain (Ω) generated by migration wherein said depth domain (Ω) comprises subsurface points and surface points (δΩ);*
- *providing a wave propagating velocity model on the depth domain (Ω);*
- *determining anisotropy parameters, dip angle θ and azimulthal angle φ of the tilted traverse isotropic media in the depth domain (Ω);*
- *generating a fine grid of surface sources;*
- *generating a coarse grid of surface sources by coarsening the fine grid of the surface sources.*

Sources are located on the surface of the Ω domain generating the acoustic shots and then the wavefield in the subsurface. The locations of the sources correspond to the nodes of the fine grid generated on the surface of the domain. A selection of the nodes of the fine grid according to a predetermined criterion generates the coarser grid.

A ray tracing algorithm requires a high amount of computations and is memory resource intensive as the travel-time must be pre-calculated at least between the source location and each point of the image, being this set of calculations required for each source location. According to an embodiment of the invention, these calculations are stored in look-up tables wherein the travel time is retrieved in any later stage of the de-migration by reading said look-up tables.

The number of computations and the size of the time tables are highly reduced by coarsening the fine grid and performing the computation only for the sources of the coarse grid. Thus, the method further comprises:
- *generating a travel time table storing at least the travel time between a surface source of the coarse grid and the subsurface points of the seismic image;*
- *carrying out the de-migration by solving the Kirchhoff equation wherein the travel time between a surface source and a subsurface point of the seismic image in the depth domain (Ω) required when solving the Kirchhoff equation is taken from the travel time table if the surface source is in the coarse grid; or calculated by interpolation if the surface source is in the fine grid but not in the coarse grid.*

According to an embodiment of the invention, when the method is implemented in a computer, each source at least of the coarse grid has its own look-up table. According to another embodiment, when the method is implemented in a computer, a single look-up table is generated wherein said look-up table comprises an entry field identifying the source.

That is, look-up tables are only generated for the sources located in the nodes of the coarse grid reducing the pre-processing workload and the required memory resources. The computation of travel time values for those sources located in nodes of the fine grid that have no corresponding nodes in the coarse grid are interpolated.

According to the present invention the interpolation of the travel time between a surface source in the fine grid and a subsurface point is carried out in a specific manner as follows:
- *determining a first pattern comprising an arrangement of points defined by the locations of:*
   ∘ *a set of surface sources of the coarse grid surrounding the surface source of the fine grid and,*
   ∘ *the surface source of the fine grid where the travel time is being calculated;*
- *determining the subsurface points of the image in the depth domain according to a second pattern, being said second pattern an arrangement of subsurface points having the same number of nodes, the same shape and same dimensions as the first pattern, the second pattern being parallel to the surface (δΩ) and, located such that the location of the subsurface point (P) of the second pattern (PT2) corresponding to the surface source of the first pattern at the fine grid is located at the subsurface point of the image where the travel time is being calculated;*
- *calculating the interpolated travel time as the weighted average of all the travel time values taken from respective travel time tables of the set of surface sources (S₃*, *S₅*, *Sₐ, S_{b}, S_{c}, S_{d}) of the coarse grid surrounding the surface source (S₄*, *Sᵢ) of the fine grid, the travel time values being the travel times between a surface source of the first pattern and the corresponding subsurface point of the image of the second pattern,*
- *making available the de-migrated data.*

The surface source in the fine grid has surrounding sources of the coarse grid where the travel time has been pre-calculated and obtained by reading their look-up tables.

The location of said surrounding sources plus the location of the surface source in the fine grid being calculated by interpolation defines the first pattern.

According to the literature on numerical methods, a pattern comprising a selection of points or nodes of a grid is identified as a stencil. In the context of the present invention, a first pattern and a second pattern are defined involving a selection of points so the term stencil also applies to said patterns.

According to preferred embodiments, the fine grid and the coarse grid are structured grids.

According to another embodiment, when the domain is a 3D domain, the fine grid and the coarse grid are rectangular grids wherein each fine grid node which is not in the coarse grid has four surrounding nodes of the coarse grid.

The first pattern is defined on the surface of the Ω domain where the sources are located. A second pattern is defined as being as the first pattern but located under the surface of the Ω domain. The position of the second pattern under the surface is determined by the displacement of the location of the source of the fine grid being calculated to the subsurface point of the image where the travel time is being calculated while keeping the second pattern parallel to the surface.

The second pattern has the same number of nodes than the first pattern; that is, each node of the coarse grid of the first pattern has a corresponding node in the second pattern, being this corresponding node located under the surface and within the Ω domain.

The interpolated travel time between the surface source in the fine grid belonging to the first pattern and the subsurface point belonging to the second pattern is determined as the weighted average of all the travel time values calculated between a surface source of the first pattern and the corresponding subsurface point of the image of the second pattern.

All the connecting lines between a surface source of the first pattern and the corresponding subsurface point of the image of the second pattern are parallel; and, contrary to the teachings of the prior art, travel time weighted values are determined involving a plurality of subsurface points rather than a single one.

According to an embodiment of the invention, the weights weighting the travel times determined between the sources of the first pattern and the image points of the second pattern according to the invention are inversely proportional to the distance between the interpolated source and the surface source corresponding to the travel time being weighted.

The interpolation method used for the computation of the travel time for those sources located at nodes of the fine grid that are not located at nodes of the coarse grid is very efficient as no time tables are pre-calculated for those sources and while avoiding distortion of seismograms obtained from de-migration.

In a further embodiment, reflection form dipping image is boost enhancing dipping events. The kernel of the Kirchhoff equation is weighted by a slope enhancing function *w_{dip}* which is expressed as: ${w}_{dip} = \sqrt{1 + {\left(\frac{dz}{dx}\right)}^{2} + {\left(\frac{dz}{dy}\right)}^{2}}$ for 3D domains, or ${w}_{dip} = \sqrt{1 + {\left(\frac{dz}{dx}\right)}^{2}}$ for 2D domains, wherein *dz*/*dx* and *dz*/*dy* are slopes along inline direction, that is, the shooting line, and the crossline direction, that is, the direction that is perpendicular to the inline direction, of the depth Ω domain respectively.

In a further embodiment, the kernel of the Kirchhoff equation is weighted by F, an anti-alias filter. In a preferred embodiment, a triangle filter for anti-alias in the time domain after the image is mapped into time domain from the migrated depth domain.

The Kirchhoff equation, comprising the anti-alias filter and the slope enhancing function may be expressed as: $U \left(\overline{x}, ω\right) ∼ {\int }_{Ω} {iωe}^{iω \left({τ}_{s}+{τ}_{r}\right)} {Fw}_{dip} w \left(s, r\right) I \left(\overline{x}, z\right) d Ω$

In a further embodiment, a post-stack Kirchhoff depth de-migration method is applied for a plurality of source grids and the resulting de-migrated data are being stacked.

The proposed de-migration method provides zero offset seism data in the time domain equivalent to the acquired field seismic data with a source and a sensor in the same surface location. The zero offset seismic data generated from de-migration can be migrated again using the different models. As a result, the skilled person in the art can validate which model is the mostly geological plausible.

Any of the former embodiments may also be used in a more complex process, a post-stack Kirchhoff depth migration. This post-stack Kirchhoff depth migration method is as follows:
a) carrying out a prestack depth Kirchhoff migration on a plurality of shot data;
b) stacking the plurality of migrated data;
c) carrying out a post-stack Kirchhoff depth de-migration method according to any of the methods previously disclosed;
d) carrying out a post-stack Kirchhoff depth migration on the de-migrated data providing seismic data;
e) making available the obtained depth migration of seismic data.

Another aspect of the invention is a computer program product configured to carry out a method according to any of the previous methods.

Another aspect of the invention is a data processing system comprising means configured to carry out a method as disclosed.

### DESCRIPTION OF THE DRAWINGS

These and other features and advantages of the invention will be seen more clearly from the following detailed description of a preferred embodiment provided only by way of illustrative and non-limiting example in reference to the attached drawings.
Figure 1 This figure shows a data processing system for carrying out a method according to the invention.
Figure 2A This figure shows an 2D example of de-migration data by using an interpolation method according to the prior art.
Figure 2B This figure shows the same 2D example of de-migration data as the previous figure wherein the interpolation method is carried out according an embodiment of the invention.
Figure 3 This figure shows an embodiment of the invention wherein the domain is a 3D domain and the interpolation is carried out by using rectangular structured fine and coarse grids.
Figure 4 This figure shows the inline image from a 2.5D example of model at the left side and, the corresponding slopes derived from said image at the right side.
Figure 5 This figure shows the re-migrations of the de-migrations of the example shown in the previous figure without slope weighting (right side) and with slope weighting (left side) respectively.

### DETAILED DESCRIPTION OF THE INVENTION

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to illustrations and/or diagrams of methods, apparatus (systems) and computer program products according to embodiments of the invention. It will be understood that each illustration can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

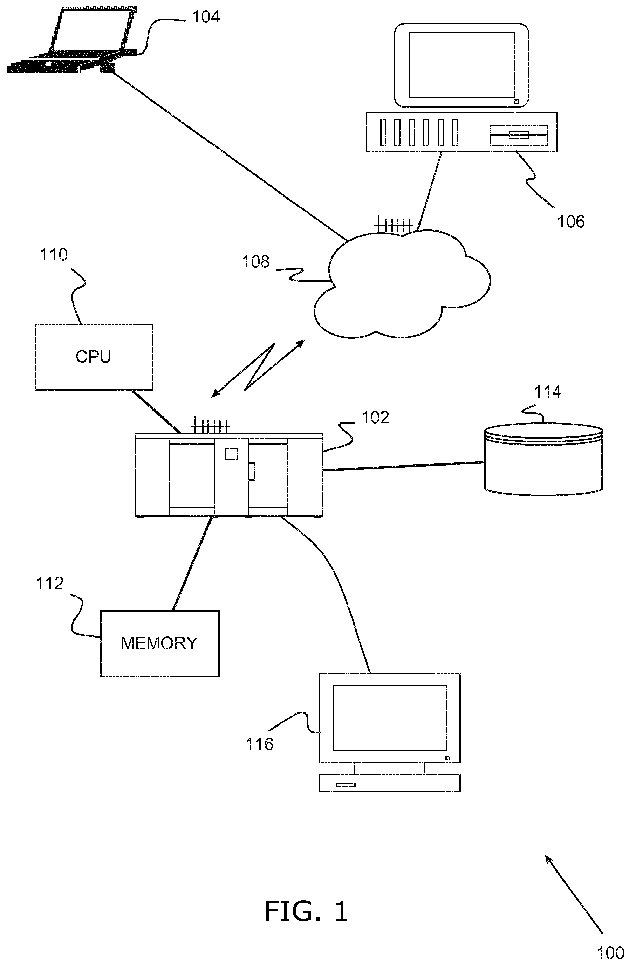

Turning now to the drawings and more particularly, figure 1 shows an example of a system 100 for determining zero offset seism data in the time domain equivalent to the acquired field seismic data with a source and a sensor in the same surface location by a post-stack Kirchhoff depth de-migration method carried out for anisotropic tilted isotropic (TTI) media based on ray tracing on migrated data, according to a preferred embodiment of the present invention.

The preferred system 100 determines a de-migrated data in an efficient manner as an interpolation method is used for the look-up time table's generation as those are limited to a sub-set of sources. The interpolation method according to the invention reduces the distortion of the seismograms from de-migration.

A preferred computing system 100 includes one or more computers 102, 104, 106 (3 in this example), coupled together, e.g., wired or wirelessly over a network 108. The network 108 may be, for example, a local area network (LAN), the Internet, an intranet or a combination thereof. Typically, the computers 102, 104, 106 include one or more processors, e.g., central processing unit (CPU) 110, memory 112, local storage 114 and some form of input/output device 116 providing a user interface. The local storage 114 may generate and/or include the time table or time tables stored as look-up tables being accessible by the plurality of computers 102, 104, 106, processing in parallel a plurality of migrated data in order carry out in a later stage a post-stack process over the de-migrated data provided by each computer 102, 104, 106.

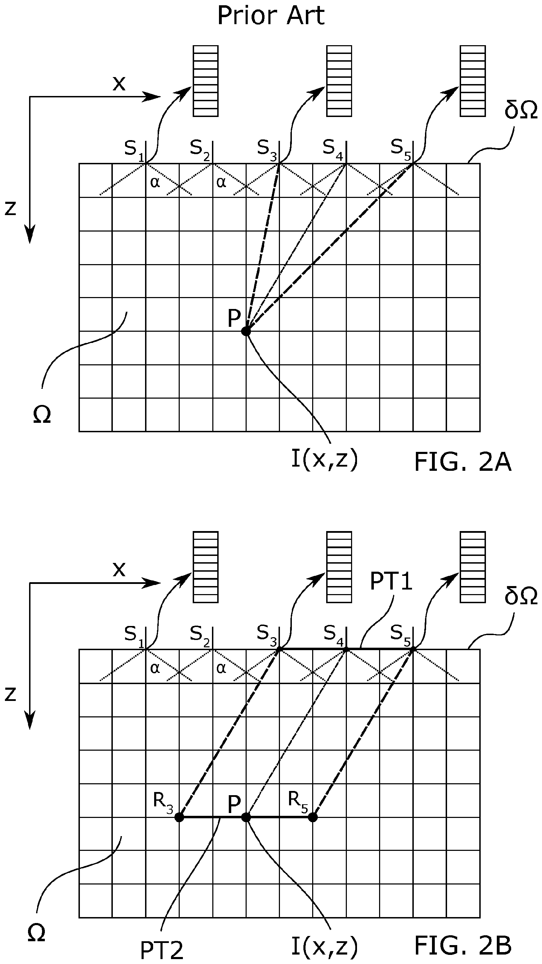

Figure 2B shows an example of one aspect of the invention using a preferred computing system (e.g., 100 of Figure 1) wherein an anisotropic ray tracing algorithm is used to compute the travel time required by de-migration. Therefore, the proposed de-migration method is suitable for complicated structures.

Theoretically, de-migration requires travel time tables for every image traces. The source (S₁, S₂, S₃ S₄, S₅) corresponding to a table is located at a surface (*δ*Ω) location of the domain (Ω) and rays from the source (S₁, S₂, S₃ S₄, S₅) traveling into all subsurface points (P) within a given aperture (α).

Therefore, travel time computation requires massive computation power. For anisotropic media, it even needs further more computational cost than isotropic media. To reduce computational cost, travel time tables are computed and stored only for given sparse surface source (S₁, S₃, S₅) locations. In an embodiment of the invention said travel time tables are stored into a disk file on the local storage 114 (figure 1).

Those sources (S₁, S₃, S₅) where the time table has been determined are represented in figures 2A and 2B by a pointer departing from the source (S₁, S₃, S₅) and pointing to a graphical representation table. Travel time determined between a source (S₂, S₄) not having a time table available and a subsurface point (P) is determined by interpolating data that involves the reading of time tables of surrounding sources (S₁, S₃, S₅) having time tables.

During process of de-migration, travel time between a certain source (S₄) and a subsurface point (P) with a value defined by the migrated image *I*(*x*,*z*) is computed by interpolating the values stored (114) in the time tables. As it is shown in figures 2A and 2B, sources (S₃, S₅) are surface sources having a time table that are surrounding the surface source (S₄) which has not a time table available.

Figure 2A shows a conventional interpolation algorithm according to the prior art. According to said conventional interpolation algorithm and being Ω a 2D domain, two surface sources (S₃, S₅) adjacent to the location of the interpolated source (S₄) are first selected.

Figure 2A shows this algorithm for a two dimensional case. The horizontal axis is the surface x coordinate and vertical axis is the depth z coordinate.

The travel time tables for the surface sources (S₁, S₃, S₅) have been computed by a pre-processing step while the travel table for surface source (S₄) is required to get using interpolation.

Taking subsurface point (P) as an example for interpolation, the travel times from S₃ to P and from S₅ to P are used to interpolate travel time from S₄ to P. This algorithm is identified as conventional algorithm. This conventional algorithm is very efficient while it results in errors in travel time, especially for shallow part even by using a velocity model where the velocity is constant. The travel time error results in distorted seismogram from de-migration.

Figure 2B shows and embodiment of the invention applied over a two dimensional domain Ω improving the accuracy of interpolation.

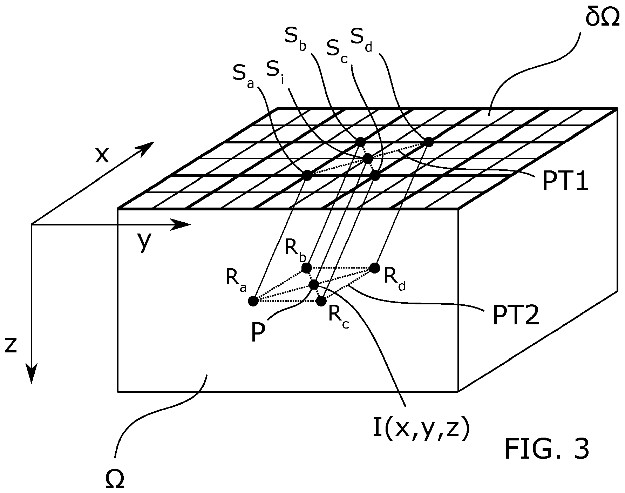

For any subsurface point P, two adjacent points corresponding to two surface sources (S₃, S₅) are selected. The two selected surface sources (S₃, S₅) having a time table plus the intermediate interpolating source (S₄) defines a first pattern. This first pattern is shown in figure 3B using thicker connecting lines between sources S₃, S₄, and S₅.

A second pattern is defined as the first pattern. In this embodiment the second pattern has also three points with the same separating distances determining two subsurface points (R₃, R₅) separated from the subsurface point P as defined by said second pattern.

Travel times involving these two adjacent points (R₃, R₅) are used to interpolate the travel time from the interpolated source S₄ to the subsurface point P. Under the constant velocity assumption, the proposed algorithm generates accurate travel time as the computed one.

Figure 2B shows this equal offset interpolation for the two dimensional case wherein the subsurface point R₃ corresponds to source S₃; subsurface point R₅ corresponds to source S₅ and P corresponds to the interpolated source S₄. Travel times from S₃ to R₃, and from S₅ to R₅ are used to interpolate travel time from S₄ to R₄ by a weighted averaged computation.

An example of weights for said weighted averaged computation makes use of weights inversely proportional to the distance between the surrounding source having a time table and the interpolated source. According to an example, a trilinear interpolation based on the distance is used.

Figure 3 shows a schematic graphical representation of a 3D domain with the upper surface comprising a plurality of sources located at the nodes of a fine rectangular and structured grid. A coarse grid is being represented over-imposed on the fine grid by using thicker lines.

The travel time tables for those surface sources located at the nodes of the coarse grid have been calculated by a pre-processing step.

Figure 3 shows a surface source Sᵢ of the fine grid which is not in the coarse grid that is surrounded by four surface sources (Sₐ, S_{b}, S_{c}, S_{d}) located on the coarse grid. Those five sources (S₁, Sₐ, S_{b}, S_{c}, S_{d}) define a first pattern (PT1).

A second pattern (PT2) having the same shape and dimensions than the first pattern (PT1) is defined and located within the domain Ω under the surface *δ*Ω. Said second pattern (PT2) is oriented parallel to the first pattern (PT1) and moved to a position such that the point corresponding to the interpolated source (Sᵢ) is now located at the point P under the surface where the travel time is being interpolated. The wording "moved to" must be construed as that the second pattern (PT2) is being located at a different location than the first pattern (PT1) as it has been disclosed.

This figure 3 also shows the connecting lines between each point of the first pattern (PT1) and the corresponding point of the second pattern (PT2) by using thin lines. All those connecting lines are parallel.

For validating the present invention, the proposed de-migration method has been used into both synthetic and field data examples. The examples shows the improvements from the implementation. To validate the proposed de-migration method, we re-migrate the de-migration result using the same models. In ideal situation, the image input for de-migration and the image from re-migration should be the same.

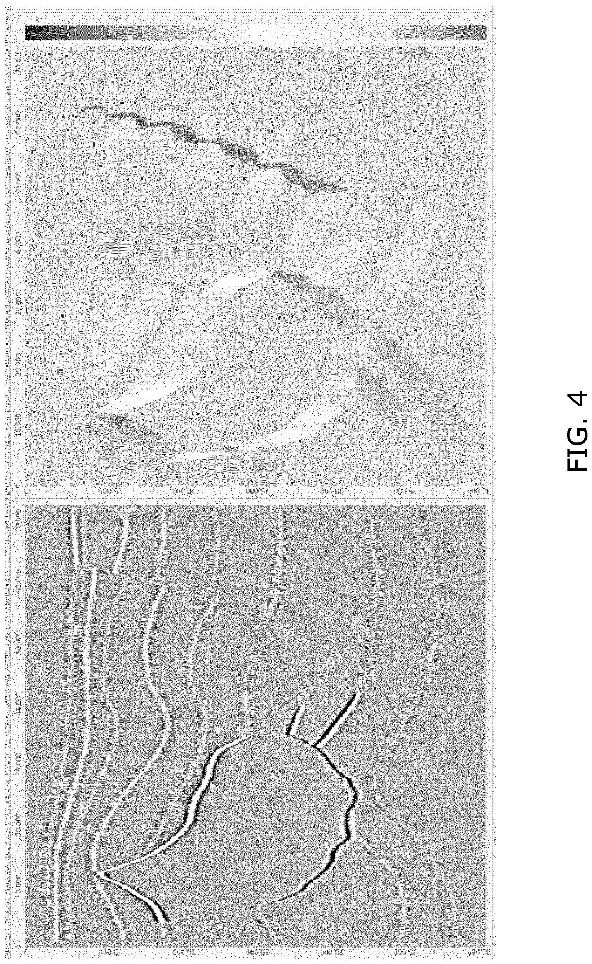

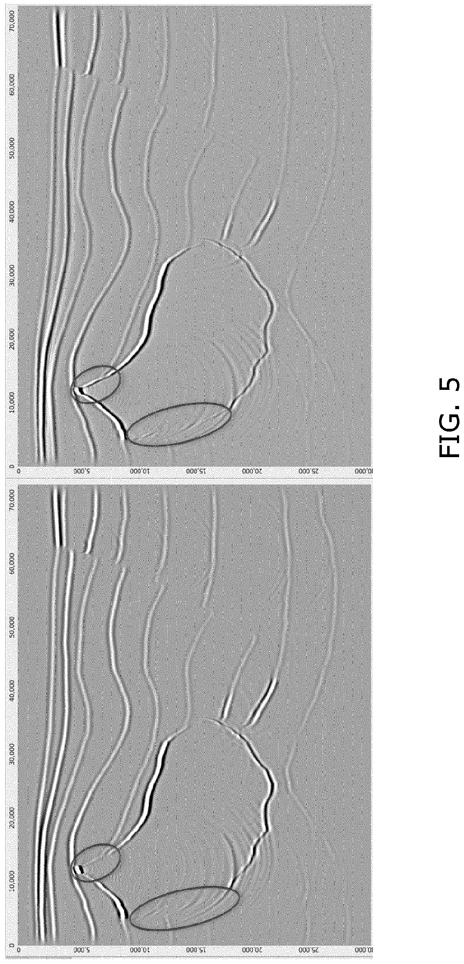

Figure 4 and 5 show the application to the 2.5D synthetic examples. The 2.5 velocity model for the examples is the modification from Hess VTI datasets wherein the 2.5D velocity model is a 3D model wherein 2D data is repeated along the third dimension; therefore, the 3D interpolation method according to an embodiment of the invention can be directly applyied for the 2.5D data. The Hess model is available at "http://software.seg.org/datasets/2D/Hess_VTI/".

Figure 4 shows the inline image from a 2.5D model at the left side and, the corresponding slopes derived from said image at the right side.

Figure 5 are the re-migrations of the de-migrations without slope weighting (right side) and with slope weighting (left side) respectively. Comparing two re-migrations, the slope weighting enhances the wavefield from the steep structures, especially in areas marked by the two ovals drawn over the picture.

## Claims

1. Post-stack Kirchhoff depth de-migration computer-implemented method for tilted transverse isotropic (TTI) and heterogeneous media based on ray tracing on migrated data comprising:
- providing a seismic image (*I*(*x̅*,*z*)) of subsurface points in a depth domain (Ω) generated by migration wherein said depth domain (Ω) comprises subsurface points and surface points (*δ*Ω);
- providing a wave propagating velocity model on the depth domain (Ω);
- determining anisotropy parameters, dip angle *θ* and azimulthal angle *φ* of the tilted transverse isotropic media in the depth domain (Ω) **the method further characterized in**
- generating a fine grid of surface sources (S₁, S₂, S₃, S₄, S₅, Sₐ, S_{b}, S_{c}, S_{d}, Sᵢ);
- generating a coarse grid of surface sources (S₁, S₃, S₅, Sₐ, S_{b}, S_{c}, S_{d}) by coarsening the fine grid of the surface sources (S₁, S₂, S₃, S₄, S₅, Sₐ, S_{b}, S_{c}, S_{d}, Sᵢ);
- generating a travel time table storing at least the travel time between a surface source (S₁, S₃, S₅, Sₐ, S_{b}, S_{c}, S_{d}) of the coarse grid and the subsurface points of the seismic image (*I*(*x̅*,*z*));
- carrying out the de-migration by solving the Kirchhoff equation wherein the travel time between a surface source (S₁, S₂, S₃, S₄, S₅, Sₐ, S_{b}, S_{c}, S_{d}, Sᵢ) and a subsurface point (P) of the seismic image (*I*(*x̅,z*)) in the depth domain (Ω) required when solving the Kirchhoff equation is taken from the travel time table if the surface source (S₁, S₃, S₅, Sₐ, S_{b}, S_{c}, S_{d}) is in the coarse grid; or calculated by interpolation if the surface source (S₁, S₂, S₃, S₄, S₅, Sₐ, S_{b}, S_{c}, S_{d}, Sᵢ) is in the fine grid but not in the coarse grid,
wherein the interpolation of the travel time between a surface source (S₁, S₂, S₃, S₄, S₅, Sₐ, S_{b}, S_{c}, S_{d}, Sᵢ) in the fine grid and a subsurface point (P) is as follows:
- determining a first pattern (PT1) comprising an arrangement of points defined by the locations of:
∘ a set of surface sources (S₃, S₅, Sₐ, S_{b}, S_{c}, S_{d}) of the coarse grid surrounding the surface source (S₄, Sᵢ) of the fine grid and,
∘ the surface source of the fine grid (S₄, Sᵢ) where the travel time is being calculated;
- determining the subsurface points (R₃, R₅, Rₐ, R_{b}, R_{c}, R_{d}, P) of the image (*I*(*x̅*,*z*)) in the depth domain (Ω) according to a second pattern (PT2), being said second pattern (PT2) an arrangement of subsurface points having the same number of nodes, the same shape and same dimensions as the first pattern (PT1), the second pattern (PT2) being parallel to the surface (*δ*Ω) and, located such that the location of the subsurface point (P) of the second pattern (PT2) corresponding to the surface source (S₄, Sᵢ) of the first pattern (PT1) at the fine grid is located at the subsurface point (P) of the image (*I*(*x̅,z*)) where the travel time is being calculated;
- calculating the interpolated travel time as the weighted average of all the travel time values taken from respective travel time tables of the set of surface sources (S₃, S₅, Sₐ, S_{b}, S_{c}, S_{d}) of the coarse grid surrounding the surface source (S₄, Sᵢ) of the fine grid, the travel time values being the travel times between a surface source (S₃, S₅, Sₐ, S_{b}, S_{c}, S_{d}) of the first pattern (PT1) and the corresponding subsurface point (R₃, R₅, Rₐ, R_{b}, R_{c}, R_{d}) of the image (*I*(*x̅*,*z*)) of the second pattern (PT2);
- making available the de-migrated data.

2. The method according to claim 1, wherein the kernel of the integral expression of the Kirchhoff equation further comprises an amplitude weighting function *w_{dip}* for enhancing dipping events being expressed as: ${w}_{dip} = \sqrt{1 + {\left(\frac{dz}{dx}\right)}^{2} + {\left(\frac{dz}{dy}\right)}^{2}}$ wherein *dz*/*dx* and *dz*/*dx* are the slope along the inline direction, that is, the shooting line, and the crossline direction, that is, the direction that is perpendicular to the inline direction, of the depth domain respectively.

3. The method according to claim 1 or claim 2, wherein the kernel of the integral expression of the Kirchhoff equation further comprises an anti-alias filter F.

4. The method according to claim 3, wherein the image of the migrated depth domain is mapped into the time domain and the anti-alias filter is a triangle filter for anti-alias the image in the time domain.

5. The method according to any of the previous claims, wherein the fine grid and the coarse grid are structured grids.

6. The method according to claim 5, wherein the domain (Ω) is a 3D domain and, the fine grid and the coarse grid are rectangular.

7. The method according to any of previous claims, wherein the weights weighting the travel times determined between the sources (S₃, S₅, Sₐ, S_{b}, S_{c}, S_{d}) of the first pattern (PT1) and the corresponding subsurface point (R₃, R₅, Rₐ, R_{b}, R_{c}, R_{d}) of the image (*I*(*x̅*,*z*)) of the second pattern (PT2) are inversely proportional to the distance between the interpolated source (S₃, Sᵢ) and the surface source (S₃, S₅, Sₐ, S_{b}, S_{c}, S_{d}) corresponding to the travel time being weighted.

8. The method according to any of the previous claims, wherein the post-stack Kirchhoff depth de-migration method is applied for a plurality of source grids and the resulting de-migrated data are being stacked.

9. A Post-stack Kirchhoff depth migration method comprising:
a) carrying out a prestack depth Kirchhoff migration on a plurality of shot data;
b) stacking the plurality of migrated data;
c) carrying out a post-stack Kirchhoff depth de-migration method according to any of previous claims;
d) carrying out a post-stack Kirchhoff depth migration on the de-migrated data providing seismic data;
e) making available the obtained depth migration of seismic data.

10. A computer program product comprising instructions which, when the program is executed by a computer, cause the computer to carry out the method of any of the previous claims.

11. A data processing system (100) comprising means configured to carry out a method according to any of claims 1 to 9.

## Patentansprüche

1. Computerimplementiertes Poststack-Kirchhoff-Tiefendemigrationsverfahren für geneigte transversalisotropische (TTI) und heterogene Medien basierend auf Strahlverfolgung auf migrierten Daten, umfassend:
- Bereitstellen eines seismischen Bildes (*I*(*x̅*,*z*)) von Untergrundpunkten in einem Tiefenbereich (Ω), die durch Migration erzeugt wurden, wobei der Tiefenbereich (Ω) Untergrundpunkte und Oberflächenpunkte (*δ*Ω) enthält;
- Bereitstellen eines Wellenausbreitungsgeschwindigkeitsmodells auf dem Tiefenbereich (Ω);
- Bestimmen von Anisotropieparametern, Neigungswinkel *θ* und Azimutwinkel *φ* der geneigten transversalisotropischen Medien in dem Tiefenbereich (Ω),
wobei das Verfahren ferner charakterisiert ist durch
- Erzeugen eines feinen Rasters von Oberflächenquellen (S₁, S₂, S₃, S₄, S₅, Sₐ, S_{b}, S_{c}, S_{d}, Sᵢ);
- Erzeugen eines groben Rasters von Oberflächenquellen (S₁, S₃, S₅, Sₐ, S_{b}, S_{c}, S_{d}) durch Vergröbern des feinen Rasters von Oberflächenquellen (S₁, S₂, S₃, S₄, S₅, Sₐ, S_{b}, S_{c}, S_{d}, Sᵢ);
- Erzeugen einer Laufzeittable, die wenigstens die Laufzeit zwischen einer Oberflächenquelle (S₁, S₃, S₅, Sₐ, S_{b}, S_{c}, S_{d}) des groben Rasters und der Untergrundpunkte des seismischen Bildes (*I*(*x̅*,*z*)) speichert;
- Ausführen der Demigration durch Lösen der Kirchhoffgleichung, wobei die Laufzeit zwischen einer Oberflächenquelle (S₁, S₂, S₃, S₄, S₅, Sₐ, S_{b}, S_{c}, S_{d}, Sᵢ) und einem Untergrundpunkt (P) des seismischen Bildes (*I*(*x̅,z*)) in dem Tiefenbereich (Ω), die zum Lösen der Kirchhoffgleichung benötigt wird, der Laufzeittabelle entnommen wird, wenn die Obeflächenquelle (S₁, S₃, S₅, Sₐ, S_{b}, S_{c}, S_{d}) in dem groben Raster ist; oder die mittels Interpolation berechnet wird, falls die Oberflächenquelle (S₁, S₂, S₃, S₄, S₅, Sₐ, S_{b}, S_{c}, S_{d}, Sᵢ) in dem feinen Raster und nicht in dem groben Raster ist,
wobei die Interpolation der Laufzeit zwischen einer Oberflächenquelle (S₁, S₂, S₃, S₄, S₅, Sₐ, S_{b}, S_{c}, S_{d}, Sᵢ) in dem feinen Raster und einem Untergrundpunkt (P) wie folgt berechnet wird:
- Bestimmen eines ersten Musters (PT1), das eine Anordnung von Punkten umfasst, die durch folgende Orte definiert sind:
- eine Menge von Oberflächenquellen (S₃, S₅, Sₐ, S_{b}, S_{c}, S_{d}) des groben Rasters, das/die die Oberflächenquelle (S₄, Sᵢ) des feinen Rasters umgibt, und
- die Oberflächenquelle des feinen Rasters (S₄, Sᵢ), wo die Laufzeit berechnet wird;
- Bestimmen der Untergrundpunkte (R₃, R₅, Rₐ, R_{b}, R_{c}, R_{d}, P) des Bildes (*I*(*x̅*,*z*)) in dem Tiefenbereich (Ω) gemäß einem zweiten Muster (PT2), wobei das zweite Muster (PT2) eine Anordnung von Untergrundpunkten ist, die die gleiche Anzahl an Knoten, die gleiche Form und die gleichen Dimensionen aufweisen wie das erste Muster (PT1), wobei das zweite Muster (PT2) parallel zu der Oberfläche (*δ*Ω) und so angeordnet ist, dass der Ort des Untergrundpunktes (P) des zweiten Musters (PT2), der der Oberflächenquelle (S₄, Sᵢ) des ersten Musters (PT1) an dem feinen Raster entspricht, an dem Untergrundpunkt (P) des Bildes (*I*(*x̅*,*z*)) angeordnet ist, an dem die Laufzeit berechnet wird;
- Berechnen der interpolierten Laufzeit als dem gewichteten Mittelwert aller Laufzeitwerte, die jeweiligen Laufzeittabellen der Menge von Oberflächenquellen (S₃, S₅, Sₐ, S_{b}, S_{c}, S_{d}) des groben Rasters entnommen sind, das/die die Oberflächenquelle (S₄, Sᵢ) des feinen Raster umgibt/umgeben, wobei die Laufzeitwerte die Laufzeiten zwischen einer Oberflächenquelle (S₃, S₅, Sₐ, S_{b}, S_{c}, S_{d}) des ersten Musters (PT1) und des entsprechenden Untergrundpunktes (R₃, R₅, Rₐ, R_{b}, R_{c}, R_{d}) des Bildes (*I*(*x̅*,*z*)) des zweiten Musters (PT2) sind;
- Zugänglichmachen der demigrierten Daten.

2. Verfahren nach Anspruch 1, wobei der Kernel des ganzzahligen Teils der Kirchhoffgleichung ferner eine Amplitudengewichtungsfunktion *w_{dip}* zum Verstärken von Dip-Ereignissen umfasst, ausgedrückt als: ${w}_{dip} = \sqrt{1 + {\left(\frac{dz}{dx}\right)}^{2} + {\left(\frac{dz}{dy}\right)}^{2}} ,$ wobei dz/dx und dz/dx die Steigung jeweils entlang der Linienrichtung, das heißt, der Schusslinie, und der Richtung quer zur Linie ist, das heißt, die Richtung, die rechtwinklig zu der Linienrichtung des Tiefenbereichs ist.

3. Verfahren nach Anspruch 1 oder Anspruch 2, wobei der Kernel des ganzzahligen Ausdrucks der Kirchhoffgleichung ferner einen Antialias-Filter F umfasst.

4. Verfahren nach Anspruch 3, wobei das Bild des migrierten Tiefenbereichs in einen Zeitbereich abgebildet wird und der Antialias-Filter ein Dreiecksfilter zum Antialiasing des Bildes im Zeitbereich ist.

5. Verfahren nach einem der vorstehenden Ansprüche, wobei das feine Raster und das grobe Raster strukturierte Raster sind.

6. Verfahren nach Anspruch 5, wobei der Bereich Ω ein 3D-Bereich ist und das feine Raster und das grobe Raster rechteckig sind.

7. Verfahren nach einem der vorstehenden Ansprüche, wobei die Gewichte zum Gewichten der Laufzeiten, die zwischen den Quellen (S₃, S₅, Sₐ, S_{b}, S_{c}, S_{d}) des ersten Musters (PT1) und des entsprechenden Untergrundpunktes (R₃, R₅, Rₐ, R_{b}, R_{c}, R_{d}) des Bildes (*I*(*x̅*,*z*)) des zweiten Musters (PT2) bestimmt wurden, zu der Distanz zwischen der interpolierten Quelle (S₃, Sᵢ) und der Oberflächenquelle (S₃, S₅, Sₐ, S_{b}, S_{c}, S_{d}), die der gewichteten Laufzeit entspricht, umgekehrt proportional sind.

8. Verfahren nach einem der vorstehenden Ansprüche, wobei das Poststack-Kirchhoff-Tiefendemigrationsverfahren auf eine Vielzahl von Quellenrastern angewendet wird und die resultierenden demigrierten Daten gestapelt werden.

9. Poststack-Kirchhoff-Tiefenmigrationsverfahren, umfassend:
a) Ausführen einer Prestack-Kirchhoff-Tiefenmigration auf einer Vielzahl aufgenommener Daten;
b) Stapeln der Vielzahl migrierter Daten;
c) Ausführen eines Poststack-Kirchhoff-Tiefendemigrationsverfahrens nach einem der vorstehenden Ansprüche;
d) Ausführen einer Poststack-Kirchhoff-Tiefenmigration auf den demigrierten Daten, die seismische Daten liefern;
e) Zugänglichmachen der erhaltenen Tiefenmigration seismischer Daten.

10. Computerprogrammprodukt, das Befehle enthält, die, wenn das Programm durch einen Computer ausgeführt wird, den Computer veranlassen, das Verfahren nach einem der vorstehenden Ansprüche auszuführen.

11. Datenverarbeitungssystem (100), umfassend Mittel, die konfiguriert sind, um ein Verfahren nach einem der Ansprüche 1 bis 9 auszuführen.

## Revendications

1. Procédé, mis en œuvre par ordinateur, de dé-migration en profondeur de Kirchhoff post-cumul pour un milieu isotrope transversal incliné (TTI) et hétérogène, basé sur le traçage de rayons sur des données migrées, comprenant:
- fournir une image sismique (*I*(*x̅*,*z*)) de points souterrains dans un domaine de profondeur (Ω) généré par migration, ledit domaine de profondeur (Ω) comprenant des points souterrains et des points de surface (*δ*Ω);
- prévoir un modèle de vitesse de propagation d'onde sur le domaine de profondeur (Ω);
- déterminer des paramètres d'anisotropie, un angle de pendage *θ* et un angle azimulthal *Φ* du milieu isotrope transversal incliné dans le domaine de profondeur (Ω)
le procédé étant **caractérisé en outre par**
- générer un maillage fin de sources de surface (S₁, S₂, S₃, S₄, S₅, Sₐ, S_{b}, S_{c}, S_{d}, Sᵢ);
- le fait de générer un maillage grossier de sources de surface (S₁, S₃, S₅, Sₐ, S_{b}, S_{c}, S_{d}) en grossissant le maillage fin des sources de surface (S₁, S₂, S₃, S₄, S₅, Sₐ, S_{b}, S_{c}, S_{d}, Sᵢ);
- générer une table de temps de parcours stockant au moins le temps de parcours entre une source de surface (S₁, S₃, S₅, Sₐ, S_{b}, S_{c}, S_{d}) du maillage grossier et les points souterrains de l'image sismique (*I*(*x̅*,*z*));
- effectuer la dé-migration en résolvant l'équation de Kirchhoff, le temps de parcours entre une source de surface (S₁, S₂, S₃, S₄, S₅, Sₐ, S_{b}, S_{c}, S_{d}, Sᵢ) et un point souterrain (P) de l'image sismique (*I(x̅*,*z*)) dans le domaine de profondeur (Ω) requis lors de la résolution de l'équation de Kirchhoff étant tiré de la table des temps de parcours si la source de surface (S₁, S₃, S₅, Sₐ, S_{b}, S_{c}, S_{d}) est dans le maillage grossier; ou le fait de calculer par interpolation si la source de surface (S₁, S₂, S₃, S₄, S₅, Sₐ, S_{b}, S_{c}, S_{d}, Sᵢ) est dans le maillage fin mais pas dans le maillage grossier, l'interpolation du temps de parcours entre une source de surface (S₁, S₂, S₃, S₄, S₅, Sₐ, S_{b}, S_{c}, S_{d}, Sᵢ) dans le maillage fin et un point souterrain (P) étant la suivante:
- déterminer un premier motif (PT1) comprenant un agencement de points définis par les emplacements:
∘ d'un ensemble de sources de surface (S₃, S₅, Sₐ, S_{b}, S_{c}, S_{d}) du maillage grossier entourant la source de surface (S₄, Sᵢ) du maillage fin et,
∘ de la source de surface du maillage fin (S₄, Sᵢ) au niveau de laquelle le temps de parcours est calculé;
- déterminer les points souterrains (R₃, R₅, Rₐ, R_{b}, R_{c}, R_{d}, P) de l'image (*I(x̅,z*)) dans le domaine de profondeur (Ω) selon un deuxième motif (PT2), ledit deuxième motif (PT2) étant un agencement de points souterrains ayant le même nombre de nœuds, la même forme et les mêmes dimensions que le premier motif (PT1), le deuxième motif (PT2) étant parallèle à la surface (*δ*Ω) et situé de telle sorte que l'emplacement du point souterrain (P) du deuxième motif (PT2) correspondant à la source de surface (S₄, Sᵢ) du premier motif (PT1) au niveau du maillage fin soit situé au point souterrain (P) de l'image (*I(x̅,z*)) au niveau duquel le temps de parcours est calculé;
- calculer le temps de parcours interpolé comme étant la moyenne pondérée de toutes les valeurs de temps de parcours issues des tables de temps de parcours respectives de l'ensemble de sources de surface (S₃, S₅, Sₐ, S_{b}, S_{c}, S_{d}) du maillage grossier entourant la source de surface (S₄, Sᵢ) du maillage fin, les valeurs de temps de parcours étant les temps de parcours entre une source de surface (S₃, S₅, Sₐ, S_{b}, S_{c}, S_{d}) du premier motif (PT1) et le point souterrain correspondant (R₃, R₅, Rₐ, R_{b}, R_{c}, R_{d}) de l'image (*I*(*x̅*,*z*)) du deuxième motif (PT2);
- mise à disposition des données dé-migrées.

2. Le procédé selon la revendication 1, dans lequel le noyau de l'expression intégrale de l'équation de Kirchhoff comprend en outre une fonction de pondération d'amplitude *w_{dip}* pour améliorer des événements à pendage s'exprimant par: ${w}_{dip} = \sqrt{1 + {\left(\frac{dz}{dx}\right)}^{2} + {\left(\frac{dz}{dy}\right)}^{2}}$ dans laquelle *dz*/*dx* et *dz*/*dx* sont la pente le long de la direction en ligne, c'est-à-dire la ligne de tir, et la direction de la ligne transversale, c'est-à-dire la direction qui est perpendiculaire à la direction en ligne, du domaine de profondeur respectivement.

3. Le procédé selon la revendication 1 ou la revendication 2, dans lequel le noyau de l'expression intégrale de l'équation de Kirchhoff comprend en outre un filtre anticrénelage F.

4. Le procédé selon la revendication 3, dans lequel l'image du domaine de profondeur migré est mappée dans le domaine temporel et le filtre anticrénelage est un filtre triangulaire pour un anticrénelage de l'image dans le domaine temporel.

5. Le procédé selon l'une quelconque des revendications précédentes, dans lequel le maillage fin et le maillage grossier sont des maillages structurés.

6. Le procédé selon la revendication 5, dans lequel le domaine (Ω) est un domaine 3D et le maillage fin et le maillage grossier sont rectangulaires.

7. Le procédé selon l'une quelconque des revendications précédentes, dans lequel les valeurs de pondération pondérant les temps de parcours déterminés entre les sources (S₃, S₅, Sₐ, S_{b}, S_{c}, S_{d}) du premier motif (PT1) et le point souterrain correspondant (R₃, R₅, Rₐ, R_{b}, R_{c}, R_{d}) de l'image (*I*(*x̅,z*)) du deuxième motif (PT2) sont inversement proportionnels à la distance entre la source interpolée (S₃, Sᵢ) et la source de surface (S₃, S₅, Sₐ, S_{b}, S_{c}, S_{d}) correspondant au temps de parcours qui est pondéré.

8. Le procédé selon l'une quelconque des revendications précédentes, dans lequel le procédé de dé-migration en profondeur de Kirchhoff post-cumul est appliqué pour une pluralité de maillages sources et les données dé-migrées résultantes sont cumulées.

9. Un procédé de migration en profondeur de Kirchhoff post-cumul comprenant:
a) effectuer une migration de Kirchhoff en profondeur pré-cumul sur une pluralité de données de tir;
b) cumuler la pluralité de données migrées;
c) mettre en œuvre un procédé de dé-migration en profondeur de Kirchhoff post-cumul selon l'une quelconque des revendications précédentes;
d) effectuer une migration en profondeur de Kirchhoff post-cumul sur les données dé-migrées fournissant des données sismiques;
e) rendre disponible la migration en profondeur obtenue des données sismiques.

10. Un produit programme d'ordinateur comprenant des instructions qui, lorsque le programme est exécuté par un ordinateur, amènent l'ordinateur à mettre en œuvre le procédé selon l'une quelconque des revendications qui précèdent.

11. Un système de traitement de données (100) comprenant des moyens configurés pour mettre en œuvre un procédé selon l'une quelconque des revendications 1 à 9.
